(19) Europäisches Patentamt

European Patent Office

Office européen des brevets

(11) **EP 3 708 922 B1**

(12) **EUROPEAN PATENT SPECIFICATION**

(45) Date of publication and mention
of the grant of the patent:
**31.08.2022 Bulletin 2022/35**

(21) Application number: **19382176.6**

(22) Date of filing: **11.03.2019**

(51) International Patent Classification (IPC):
*F24F 13/12* *(2006.01)*    *F24F 13/06* *(2006.01)*
*F16K 3/00* *(2006.01)*    *F16K 3/02* *(2006.01)*
*F16K 31/50* *(2006.01)*    *F16K 11/065* *(2006.01)*
*F16K 31/53* *(2006.01)*    *F16K 37/00* *(2006.01)*
*F16K 27/00* *(2006.01)*

(52) Cooperative Patent Classification (CPC):
**F24F 13/06; F16K 3/02; F16K 11/0655;
F16K 27/003; F16K 31/508; F16K 31/53;
F16K 37/0016; F24F 13/12**

(54) **NOZZLE**

EINSTELLBARE DÜSE

BUSE RÉGLABLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**16.09.2020 Bulletin 2020/38**

(73) Proprietor: **Schako Iberia, S.L.
50840 San Mateo de Gallego (Zaragoza) (ES)**

(72) Inventor: **VÖGELI, Beat
50840 SAN MATEO DE GALLEGO (Zaragoza) (ES)**

(74) Representative: **Herrero & Asociados, S.L.
Cedaceros, 1
28014 Madrid (ES)**

(56) References cited:
WO-A1-2017/170000    CN-A- 1 502 932
JP-A- H1 089 718    JP-A- S6 099 949
US-A- 3 099 949    US-A- 3 250 205

## Description

## TECHNICAL FIELD OF THE INVENTION

The present invention relates to an adjustable nozzle and a multinozzle system comprising said nozzle, which has applications in the field of elements and systems in fluid mechanics, and more specifically in the industry of air conditioning systems, enabling effective flow regulation.

## BACKGROUND OF THE INVENTION

A nozzle is a device through the inside of which a fluid circulates and the functional nature of which consists of transforming the energy stored in the fluid in the form of enthalpy (pressure energy + energy or thermal state) into kinetic energy. This transformation is achieved by means of variations of the flow passage area.

Currently, there are different types of nozzles which can be classified depending on how the energetic transformation affects the conditions of the fluid. One of these types are convergent nozzles, wherein by means of a reduction of the passage area the speed of the fluid is increased, transforming the pressure energy into kinetic energy. This speed increase in the outlet section can be used to carry or provide movement to the fluid wherein the nozzle discharges. The high-speed fluid leaving the nozzle is normally called a jet and the carrying phenomenon caused by this jet is called induction or entrainment depending on the field of application. The fluid crossing through the nozzle and generating the jet is the injected fluid, while the fluid carried by the jet is the induced fluid.

There are applications using systems with multiple nozzles, usually known as multinozzle systems, in order to have multiple jets which generate induction in a controlled manner in a certain spatial arrangement. The flow regulation in these systems is often performed by means of additional elements, such as flap valves, which cause a high drop in pressure and wherein high-turbulence profiles are created at the outlet requiring the use of silencers, for which reason this regulation is able to be improved.

Chinese patent application No. CN-1502932-A discloses an air quantity regulating device for ceiling-mounted air-conditioning equipment, that includes air discharge outlet placed in the interior of ceiling-mounted air-conditioning equipment on the ceiling board for discharging the air heat-exchanged by heat exchanger into the room interior and air quantity regulating device which is placed on the discharge outlet and can be used for utilizing change of discharge area to regulate the quantity of the air discharged to discharge outlet. Said device is equipped with covering plate which is perpendicular to the discharge direction of the air and is used for changing the discharge outlet area so as to can implement regulation of air quantity.

Valves whose inherent characteristic curve is linear, are flow regulation devices whose regulation characteristics are very interesting for controlling the flow in installations with a low pressure drop such as air conditioning installations. The flow regulation capacity of a valve in an installation depends on the pressure drops of said installation outside of the valve with respect to the very pressure drop of the valve. This ability is characterised by the relationship between the percentage of the flow which transferred by the valve in a certain operating point with respect to the percentage of the path of travel of the valve. The characteristic curve between the flow percentage and the percentage of the isolated path of travel of the valve is called inherent flow characteristic and the curve corresponding to the already-installed valve is called effective flow characteristic.

Depending on the shape of the inherent flow characteristic, the valve is classified in one way or another. Within the different types of valves according to the inherent flow characteristic, there are two which are especially relevant for controlling the flow in fluid installations: linear and equal percentage valves.

Depending on the pressure drop of the entire installation, it can be of interest to use one type of valve or another. The coefficient r synthesises the pressure drop of the entire installation compared to that of the isolated valve. If an r value is close to 0, it means that the installation has a very high pressure drop with respect to that of the valve. Conversely, r values close to 1 correspond to installations wherein the majority of the pressure drop is in the valve itself.

From the point of view of regulation and control, currently, there is a need for a linear relationship between the path of travel of the valve and the flow in the line, if possible even a one-to-one relationship (proportionality constant of 1). To this end, in installations with an elevated pressure drop outside of the valve, an equal percentage inherent flow characteristic is of interest, while in installations with a very low pressure drop, a linear characteristic would be of interest. This aspect is able to be improved in current systems.

## DESCRIPTION OF THE INVENTION

A first aspect of the present invention relates to a nozzle according to claim 1, which enables effective flow regulation.

The adjustable nozzle proposed by the invention comprises a hollow fixed body wherein an inner volume is defined between an inlet section and an outlet section, wherein the fixed body has a certain height L, between the inlet section and the outlet section, according to a central axis (x) of the nozzle, basically coinciding with the theoretical flow direction.

However, according to the invention, the nozzle comprises a mobile element which in turn comprises a three-dimensional blocking body situated, with the possibility of movement, in a sealed manner inside the inner volume of the fixed body.

Likewise, the mobile element comprises a blocking surface, preferably perpendicular to the blocking body and making up one same part, wherein the blocking surface is situated in correspondence with the inlet section. The mobile element is movable between a maximum opening position of the nozzle, wherein the blocking surface keeps the inlet section completely open and the blocking body is situated in the inner volume such that it enables the flow through the nozzle, and a blocking position, wherein the blocking surface completely closes the inlet section and the blocking body is situated in the inner volume such that it prevents the flow through the nozzle.

In the intermediate positions from the maximum opening to the blocking position, the blocking body starts to reduce the inner volume through which the flow can pass, in a manner coordinated with the blocking of the inlet section which the blocking surface starts to perform.

Therefore, the mobile element enables both the inlet section, the inner volume and the outlet section to be modified simultaneously. Meaning, the adjustment is achieved by means of the variation in the passage area and the inner volume, all of this by means of the movement of the three-dimensional blocking body, keeping a constant area in a plane perpendicular to the movement direction of the blocking body.

It is envisaged that a nozzle according to the invention can be convergent or not convergent and can have any passage area inside the volume.

Thus, in equipment with the nozzles of the invention, which are chosen depending on the needs, for example for air conditioning in a location, larger or smaller diameters are chosen which enable more or less flow for one same working pressure, or vice versa. The equipment can be adapted to the changes in needs of the location or space to be conditioned without it needing to be substituted for another one with different capacity or flow range. This enables the planners to be able to define the uses of the spaces to be conditioned subsequently and even modify the originally foreseen uses without needing to modify the project or the installation. In duct systems with constant pressure wherein until now, in the state of the art, flow regulators have been used to balance flow in the equipment, the invention makes these regulators as well as the silencers used after these to mitigate the noise coming from the regulators not necessary. The invention enables the outlet speeds to be maintained and regulation to be achieved.

According to a preferred embodiment of the invention, the nozzle is convergent and the fixed body comprises four faces of which the opposite ones are the same two by two, such that the blocking body and the two first faces of the fixed body opposite from each other are flat and have the same geometry, while the other two second faces of the fixed body have a curved configuration such that:

- the contraction ratio (CR) between the inlet and the outlet of the nozzle is between 5 and 25,
- the ratio between the development length (L) of the nozzle and the inner outlet diameter ($D_o$) meets $L/D_o > 2$, which relates the inlet section with the distance between the inlet and outlet sections (depth of the nozzle), sufficient to accommodate the contraction profile without sudden changes in direction.
- the curvature of the second faces comprises a contraction profile with a smooth function of the 6th degree having the following characteristics:

  - without a slope or curvature in the inlet and outlet in the direction of the central axis (x) of the nozzle,
  - without curvature in the inflexion point ($x_{inf}$) of the curve (where x = Xinf),
  - wherein the ratio between the distance of the inflection point in the nozzle development direction (x) from the inlet section, $x_{inf}$, and the development length (L), $x_{inf}/L$, is between 0.4 and 0.6.

The contraction ratio (CR) corresponds to the ratio between the inlet area ($A_i$) and the outlet area ($A_o$):

$$RC = \frac{A_i}{A_o}$$

This geometry of the nozzle of the invention achieves: a) a low pressure drop, and b) a low-turbulence profile optimized in the outlet section, with which the sound level is able to be minimized. These effects are maintained during all the range of operation, meaning, for any opening area.

Furthermore, the movement mode of the blocking body and the flat shape of the first two faces of the fixed body, enable the nozzle to operate like a valve with a linear inherent flow characteristic, which is especially useful for adjusting the flow in air conditioning and ventilation installations and in other installations with low pressure drop or with constant inlet pressure.

Therefore, the nozzle object of the present invention is a nozzle the inner surface of which, in contact with the injected fluid, consists of 3 fixed faces and 1 mobile face; and the area of which can be whatever enables the movement of the mobile face on the adjacent fixed ones. Therefore, the passage area is able to be regulated by means of the movement of just one of the faces thereof (unidirectionally adjustable), which greatly simplifies the required movement mechanism.

Moreover, the passage area can be regulated from a minimum (which can be completely closed or another minimal area) to a maximum in a manner proportional to the movement or path of travel of the mobile face. The advantages of these characteristics are clear since they enable controlling the outlet section by means of very elementary controls of the path of travel of the mechanism producing the movement, since it only needs to be linear.

Nevertheless, it is envisaged that the surfaces making up the 4 internal faces of the nozzle are different from each other. The only particularity that must be satisfied is that the surfaces of the 2 fixed faces adjacent to the blocking body are such that they enable the movement of said face.

Within the invention all the nozzle geometries are envisaged with 4 inner faces of which only 1 moves in order to modify the passage area. The fixed faces of the nozzle make up an external part which is the body or fixed nozzle, through the inside of which the mobile element slides like slide rails, wherein there is a blocking body and a flat base or blocking surface for closing the hollow which stays in the inlet of the fixed nozzle in the intermediate positions (<100 % of maximum opening) of the path of travel of the slide rail.

The possibility is envisaged of that on the contact surfaces between both portions of the nozzle, an elastic material can be incorporated such that by means of tightening in the assembly, the maximum level of airtightness is ensured.

As mentioned, another of the notable features of the described nozzle is the low level of pressure drop. The pressure drops ($\Delta P$) in contractions (holes, valves, etc.) have the following relationship with the volumetric flow (Q):

$$Q = C_d \cdot A \cdot \sqrt{\frac{2}{\rho}} \cdot \sqrt{\Delta P}$$

Wherein $\rho$ is the average density of the fluid in the contraction, A is the outlet section and $C_d$ is a non-dimensional coefficient representing the drop in flow due to the inevitable mechanical energy losses due to the friction of the fluid particles through the contraction. The term $C_d$ is commonly called the coefficient of discharge and the value thereof is between 0 and 1. An ideal contraction (without energy losses) will have discharge coefficient values of 1 and as the effectiveness of the contraction goes down so will the value of this coefficient.

Besides maintaining a very low pressure drop level, the geometry of the described nozzle creates in the outlet section thereof a profile with very low turbulence optimised to minimise the sound level.

A second aspect of the invention relates to a multinozzle system comprising an adjustable nozzle such as the one described previously, given that it is suitable for multinozzle systems, among others, active chilled beams.

The system of the invention comprises a plurality of adjustable nozzles according to the invention, wherein the fixed bodies are secured to each other, and the mobile elements are also secured to each other, wherein the system comprises at least one frame to which the mobile elements are fastened with the possibility of sliding through the inside of the fixed bodies. In this case, the nozzles can be unidirectional or not unidirectional.

There are many applications wherein devices with several nozzles are used. For example, it is very common in air conditioning and air diffusion devices.

According to a preferred embodiment, the system of the invention is designed for the operation of adjustable unidirectional nozzles. The design is a pattern which can be longitudinally extended in order to be adapted to any number of nozzles.

The possibility is envisaged that one end of at least one frame comprises a tab in which a threaded body is housed wherein a shaft is threaded, the rotation of which produces the linear movement of the frame and the mobile elements, the movement of which is guided by means of at least one lateral guide or nozzle fasteners, which is what enables the passage area of each nozzle to vary. Therefore, between the frame and the casing securing the nozzles, the lateral guides or nozzle fasteners are installed, one of these situated centrally, according to the particular configuration of the equipment, which force the mobile element to perform a linear movement, through the inside of the fixed bodies.

The possibility is envisaged that the system comprises an actuation mechanism which comprises a first conic gear connected to an actuation shaft, wherein said first conic gear is enmeshed with a second conic gear which is directly connected to the shaft (6), the rotation of which produces the linear movement of the frame.

This actuation enables the linear movement of the multinozzle regulation device to be transformed into a rotational actuation movement with an indicator which enables the corresponding position in the path of travel to be visualised.

The application of the multinozzle system of the invention is envisaged, in particular with the adjustment and visualisation mechanism, in air conditioning inductors (active chilled beams).

The inductors or active chilled beams, are equipment having a primary pressurised air inlet which is injected through holes or openings creating a series of jets inside the equipment, which cause an induced flow of the air from the room to be conditioned or ventilated. The functionality of the carrying caused is double: on one hand, the air of the room is mobilised for the renovation thereof by mixing and for the redistribution thereof, preventing stratifications, and, on the other hand, the induced air is conditioned in order to remove the corresponding thermal load making it pass through a heat exchanger or coil, with which heat transfer is established which increases or decreases the temperature of the induced fluid. The geometry of the injection openings is crucial for the technical features of the equipment in multiple directions:

- Pressure level required to satisfy a certain ventilation flow. Openings or holes with excessive pressure drops, for example sudden contractions of the passage area, require the inlet pressure to be increased in order to satisfy the same needs for ventilation or carrying. Consequently, and due to the accumulation of contributions from the multiple sets of equipment making up the air conditioning installations, this causes the installations to be unnecessarily large, in addition to favouring energetic inefficiencies.
- Extension of the primary flow range. Openings, the shapes of which are predisposed to have a lower pressure drop, enable a greater primary flow range for the same passage area given the same feed pressure.
- Noise generation. Sudden, noncontinuous or insufficient contractions produce jets with increased turbulence. The fluctuation of the speed is a source of aerodynamic noise.

Therefore, the particular use of a system like the one described previously as an inductor for air conditioning devices is envisaged.

## DESCRIPTION OF THE DRAWINGS

To complement the description provided herein and for the purpose of helping to better understand the features of the invention according to a preferred practical embodiment thereof, said description is accompanied by a set of figures constituting an integral part of the same, wherein the following is depicted with an illustrative and non-limiting character:

Figures 1 and 2.- Show a schematic view, exploded and assembled, in the maximum opening position of the nozzle with an adjustable area according to the invention.
Figures 3 and 4.- Show two perspective views of a multinozzle system according to the invention.
Figure 5.- Shows a perspective view of details of the actuation and regulation device assembled in equipment.
Figure 6.- Shows an exploded view wherein the assembly of the frame, slide rails and fixed nozzles can be seen.
Figures 7 to 10.- Show perspective views of the actuation and visualization mechanism of the regulation device of the nozzles.
Figure 11.- Shows a longitudinal cross section wherein the geometric parameters of a nozzle according to the invention are shown.

## PREFERRED EMBODIMENT OF THE INVENTION

In light of the figures discussed above, it can be seen how in one of the possible embodiments of the invention the adjustable nozzle proposed by the invention comprises a hollow fixed body (1) wherein an inner volume is defined between an inlet section and an outlet section, wherein the fixed body (1) has a certain height L, between the inlet section and the outlet section, according to a central axis (x) of the nozzle.

According to the invention, the nozzle comprises a mobile element (2) which in turn comprises a three-dimensional blocking body (2') situated, with the possibility of movement, in a sealed manner inside the inner volume of the fixed body (1).

The mobile element (2) comprises a blocking surface (2"), perpendicular to the blocking body and forming one same part, wherein the blocking surface (2") is situated in correspondence with the inlet section. The mobile element (2) is movable between a maximum opening position of the nozzle, wherein the blocking surface (2") keeps the inlet section completely open and the blocking body (2') is situated in the inner volume such that it enables the flow through the nozzle, and a blocking position, wherein the blocking surface (2") completely closes the inlet section and the blocking body is situated in the inner volume such that it prevents the flow through the nozzle.

In the intermediate positions from the maximum opening to the blocking position, the blocking body starts to reduce the inner volume through which the flow can pass, in a manner coordinated with the blocking of the inlet section which the blocking surface starts to perform.

As shown in the figures, according to a preferred embodiment of the invention, the nozzle is convergent and the fixed body (1) comprises four faces of which the opposite ones are the same two by two, such that the blocking body (2') and the two first faces (1') of the fixed body (1) opposite from each other are flat and have the same geometry, while the other two second faces (1") of the fixed body (1) have a curved configuration such that:

- the contraction ratio (CR) between the inlet and the outlet of the nozzle is between 5 and 25,
- the ratio between the development length (L) of the nozzle and the inner outlet diameter ($D_o$) is $L/D_o > 2$,
- the curvature of the second faces (1") comprises a contraction profile with a smooth function of the 6th degree having the following characteristics:

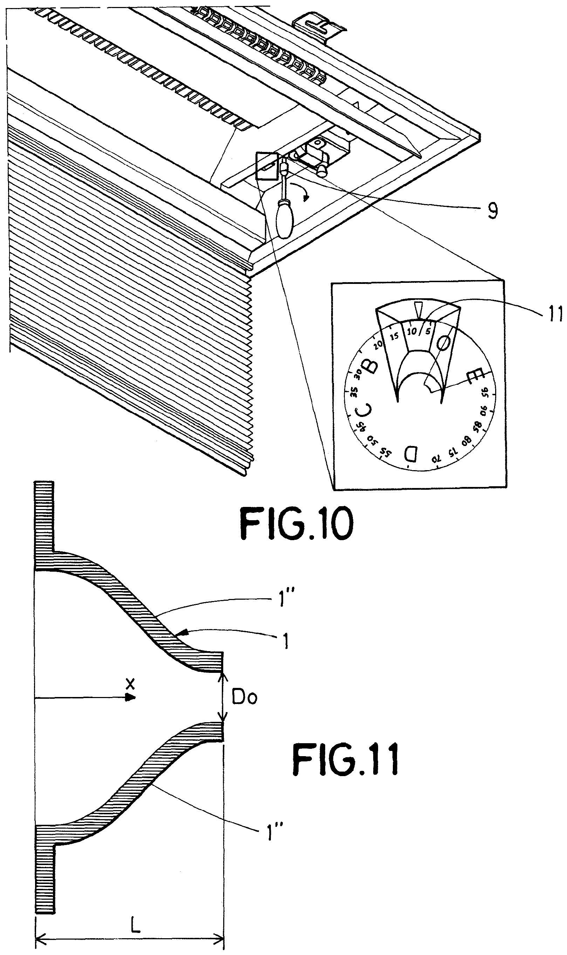

  - without a slope or curvature in the inlet and outlet in the direction of the central axis (x) of the nozzle,
  - without curvature in the inflexion point ($x_{inf}$) of the curve (where $x = Xinf$),
  - wherein the ratio between the inflection point location ($x_{inf}$) and the development length (L), $x_{inf}/L$, is between 0.4 and 0.6, wherein $x_{inf}$ is the distance to the inflection point in the nozzle development direction (x) from the inlet section, as seen in Figure 11.

Preferably on the contact surfaces between both portions of the nozzle an elastic material is incorporated, as shown in the figures, such that by means of tightening in the assembly the maximum level of airtightness is ensured.

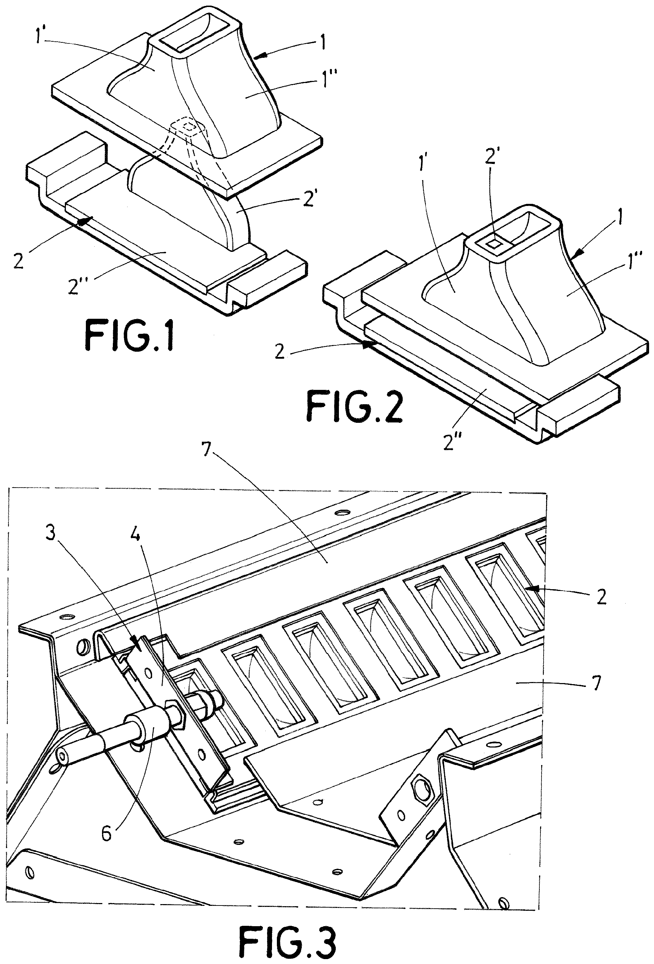

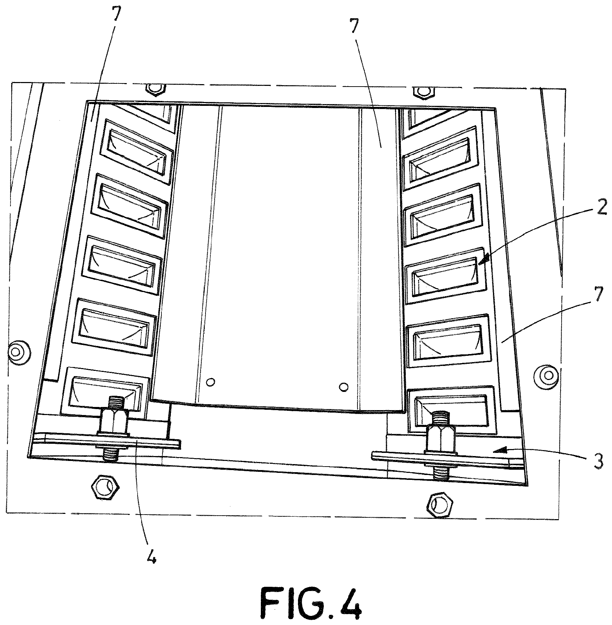

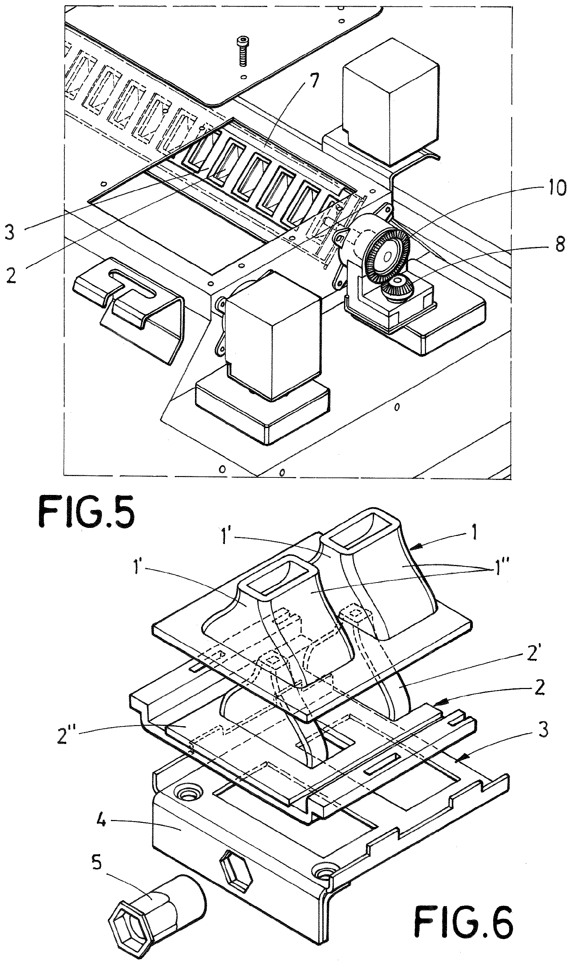

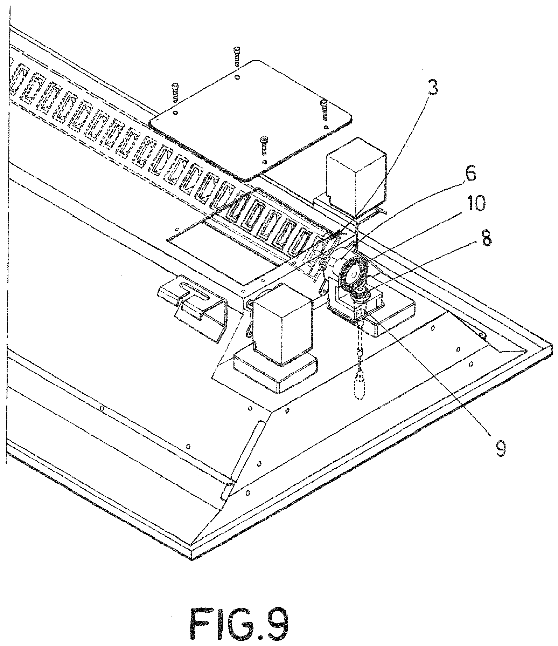

A second aspect of the invention relates to a multinozzle system comprising an adjustable nozzle such as the one described previously, as shown in Figures 3 to 10.

The system of the invention comprises a plurality of adjustable nozzles according to the invention, wherein the fixed bodies (1) are secured to each other, and the mobile elements (2) are also secured to each other, wherein the system comprises at least one frame (3), preferably two, which have a U-shaped configuration, comprising a plurality of teeth which are inserted into housings had by the mobile elements, such that in this manner they are fastened to the mobile elements (2), such that the frame assembly (3) and the mobile elements (2) have the possibility of sliding through the inside of the fixed bodies (1).

As shown in Figures 3, 4, 6 and 7, one end of each frame (3) comprises a tab (4) in which a threaded body (5) is housed wherein a shaft (6) is threaded, wherein the system is configured such that the rotation of said shaft (6) produces the linear movement of the frame (3) and the mobile elements (2), wherein the system comprises at least one lateral guide (7) for guiding said linear movement, which is what enables the passage area of each nozzle to vary. Therefore, between the frame (3) and the casing securing the nozzles, the lateral guides (7) are installed, one of these situated centrally in the configuration of the equipment shown, which force the mobile element (2) to perform a linear movement through the inside of the fixed bodies (1).

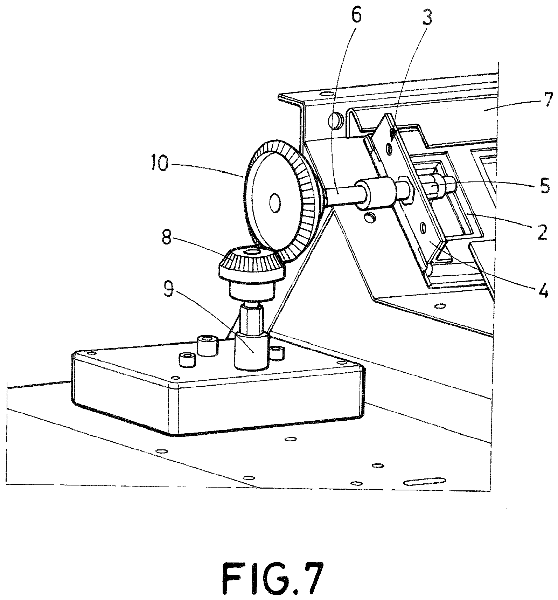

Figures 7 to 10 show that the system comprises an actuation mechanism which comprises a first conic gear (8) connected to an actuation shaft (9), wherein said first conic gear is enmeshed with a second conic gear (10) which is directly connected to the shaft (6), the rotation of which produces the linear movement of the frame (3).

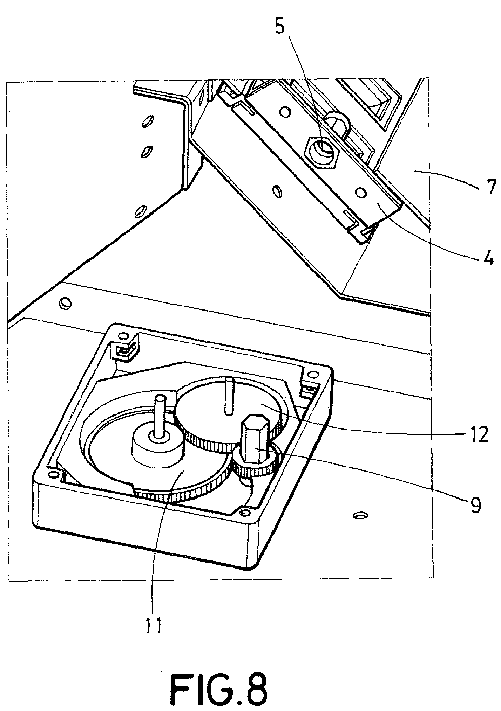

This actuation enables the linear movement of the multinozzle regulation device to be transformed into a rotational actuation movement with an indicator (11), shown in Figures 8 and 10, which enables the corresponding position in the path of travel to be visualised. The elements it comprises are described below:

- Threaded body (5) of the frame (3). The function thereof is, together with the threaded shaft (6), that of transforming the linear movement into rotational movement and transmitting the force exerted through the torque of the shaft (6) to the frame (3).
- Horizontal threaded shaft (6). The function thereof, together with the threaded body (5) of the frame (1), is that of transmitting the action force to the frame (3) and that of converting the rotational movement into linear movement. The design of the shaft (6) with respect to the positioning thereof in the casing and the redirection or transmission assembly (8, 10) which only enables the rotation thereof by locking the movement in direction X, such that in that direction it is only possible for the frame (3) to move.

- Redirection assembly comprising conic gears (8, 10).
- A support for gears (8, 10) and other fastening and positioning elements. The support is especially designed to be adapted to the conic gears (8, 10) and to the equipment. This support enables the correct positioning of the gears, the function of which is the transmission of the rotational movement of the direction of the actuation shaft (9) and applying a certain reduction ratio.
- Actuation shaft (9). This is the drive shaft whereon the user of the equipment acts.
- Reducer wheels (12) of the indicator box. The function thereof is that of reducing the number of turns from the actuation shaft (9) to the indicator wheel (11).
- Indicator or indicating wheel (11). This wheel incorporates the indications marked by the position in the path of travel. The dimensioning of this wheel and the reducer wheels (12) depends on the number of turns given by the actuation shaft (9) for one complete path of travel of the regulation nozzles and must be such that the rotation thereof does not exceed 1 turn.
- Indicator consisting of a window in the indicator box and a series of indications in the indicator wheel (11) which denote the position in the path of travel as it passes by said window.

As mentioned previously, for optimal operations in terms of induction capacity and low noise generation it is indispensable to ensure the airtightness between the fixed bodies and the mobile elements. To do so, the mobile elements (2) incorporate an elastic material (seal) in the surfaces which come in contact with the fixed bodies along the entire path of travel thereof. It is required, furthermore, that the fastening parts of the nozzles achieve a certain compression in the seal, this generates a friction force which starting from a certain length can reach very high levels. The designed actuation device enables the force required for the movement of the nozzles to be noticeably reduced thanks to the transformation of the linear movement into rotational movement in the joint of the Threaded element of the frame - Horizontal threaded shaft joined to the transmission ratio in the redirection assembly. This reducer assembly also favours the increase in the adjustment capacity of the positioning or resolution, since it increases the ratio of the number of turns of the action shaft divided by unit of linear movement of the slide rail. The dimensioning of the different gears of the indicator box is such, that the rotation angle of the indicator wheel is maximised, thereby favouring the maximum visual resolution of the indicator.

In light of this description and the set of figures, a person skilled in the art will understand that the embodiments of the invention that have been described can be combined in multiple ways Z r as long as in the scope of the claims. The invention has been described according to preferred embodiments thereof, but for the person skilled in the art, it will be evident that multiple variations can be introduced in said preferred embodiments without departing from the object of the invention as has been claimed.

## Claims

1. An adjustable nozzle, comprising a fixed body (1) wherein an inner volume is defined between an inlet section and an outlet section, **characterised in that** it comprises a mobile element (2) which in turn comprises a three-dimensional blocking body (2') situated, with the possibility of movement, in a sealed manner inside the inner volume of the fixed body (1), wherein the mobile element (2) likewise comprises a blocking surface (2") situated in correspondence with the inlet section, wherein said mobile element (2) is movable between a maximum opening position of the nozzle, wherein the blocking surface (2") keeps the inlet section completely open and the blocking body (2') is situated in the inner volume such that it enables the flow through the nozzle, and a blocking position, **characterized in that** in the blocking position the blocking surface (2") completely closes the inlet section and the blocking body is situated in the inner volume such that it prevents the flow through the nozzle.

2. The nozzle according to claim 1, which is convergent and the fixed body (1) comprises four faces of which the opposite ones are the same two by two, wherein the blocking body (2') and the two first faces (1') of the fixed body (1) opposite from each other are flat and have the same geometry, while the other two second faces (1") of the fixed body (1) have a curved configuration such that:

   - the contraction ratio (CR) between the inlet and the outlet of the nozzle is between 5-25,
   - the ratio between the development length (L) of the nozzle and the inner outlet diameter ($D_o$) is $L/D_o > 2$,
   - the curvature of the second faces (1") comprises a contraction profile with a smooth function of the 6th degree having the following characteristics:

      - without a slope or curvature in the inlet and outlet in the direction of the central axis (x) of the nozzle,
      - without curvature in the inflection point

($x_{inf}$) of the curve,
- wherein the ratio between the location according to the central axis (x) of the inflection point ($x_{inf}$) and the development length (L), $x_{inf}/L$ is between 0.4-0.6.

3. A system, comprising a plurality of adjustable nozzles according to any of the preceding claims, wherein the fixed bodies (1) are secured to each other, and the mobile elements (2) are also secured to each other, wherein the system comprises at least one frame (3) to which the mobile elements (2) are fastened with the possibility of sliding through the inside of the respective fixed bodies (1).

4. The system according to claim 3, wherein one end of at least one frame (3) comprises a tab (4) in which a threaded body (5) is housed wherein a shaft (6) is threaded, the rotation of which produces the linear movement of the frame (3) and the mobile elements (2), the movement of which is guided by means of at least one lateral guide (7).

5. The system according to claim 4, comprising an actuation mechanism comprising a first conic gear (8) connected to an actuation shaft (9), wherein said first conic gear is enmeshed with a second conic gear (10) which is directly connected to the shaft (6), the rotation of which produces the linear movement of the frame (3).

6. A use of a system according to any of claims 3 to 5 as an inductor for air conditioning devices.

## Patentansprüche

1. Einstellbare Düse, die einen feststehenden Körper (1) umfasst, wobei ein Innenvolumen zwischen einem Einlassabschnitt und einem Auslassabschnitt definiert ist, **dadurch gekennzeichnet, dass** sie ein bewegliches Element (2) umfasst, das seinerseits einen dreidimensionalen Sperrkörper (2') umfasst, der beweglich in abgedichteter Weise innerhalb des Innenvolumens des feststehenden Körpers (1) angeordnet ist, wobei das bewegliche Element (2) ebenfalls eine Sperrfläche (2") umfasst, die in Übereinstimmung mit dem Einlassabschnitt angeordnet ist, wobei das bewegliche Element (2) zwischen einer maximalen Öffnungsposition der Düse, in der die Sperrfläche (2") den Einlassabschnitt vollständig offen hält und der Sperrkörper (2') sich in dem inneren Volumen befindet, so dass er den Durchfluss durch die Düse ermöglicht, und einer Sperrposition beweglich ist, **dadurch gekennzeichnet, dass** in der Sperrposition die Sperrfläche (2") den Einlassabschnitt vollständig verschließt und sich der Sperrkörper in dem inneren Volumen befindet, sodass er den Durchfluss durch die Düse verhindert.

2. Düse nach Anspruch 1, die konvergent ist und deren feststehender Körper (1) vier Flächen umfasst, von denen die einander gegenüberliegenden zwei gleich sind, wobei der Sperrkörper (2') und die beiden ersten Flächen (1') des feststehenden Körpers (1), die einander gegenüberliegen, flach sind und die gleiche Geometrie aufweisen, während die beiden anderen zweiten Flächen (1") des feststehenden Körpers (1) eine gekrümmte Konfiguration aufweisen, so dass:

- das Kontraktionsverhältnis (CR) zwischen dem Einlass und dem Auslass der Düse zwischen 5 und 25 liegt,
- das Verhältnis zwischen der Erstreckungslänge (L) der Düse und dem inneren Austrittsdurchmesser ($D_0$) $L/D_0 > 2$ ist,
- die Krümmung der zweiten Flächen (1") ein Kontraktionsprofil mit einer glatten Funktion sechsten Grades mit den folgenden Eigenschaften umfasst:

- ohne Steigung oder Krümmung im Ein- und Auslass in Richtung der Mittelachse (x) der Düse,
- ohne Krümmung im Wendepunkt ($x_{inf}$) der Kurve,
- wobei das Verhältnis zwischen der Lage des Wendepunkts ($x_{inf}$) in Bezug auf die Mittelachse (x) und der Erstreckungslänge (L) $x_{inf}/L$ zwischen 0,4 und 0,6 liegt.

3. System mit mehreren verstellbaren Düsen nach einem der vorhergehenden Ansprüche, wobei die feststehenden Körper (1) aneinander festgelegt sind und die beweglichen Elemente (2) ebenfalls aneinander festgelegt sind, wobei das System mindestens einen Rahmen (3) umfasst, an dem die beweglichen Elemente (2) so festgelegt sind, dass sie durch das Innere der jeweiligen festen Körper (1) gleiten können.

4. System nach Anspruch 3, wobei ein Ende des mindestens einen Rahmens (3) eine Lasche (4) aufweist, in der ein Gewindekörper (5) angeordnet ist, in den eine Welle (6) eingezogen ist, deren Drehung die lineare Bewegung des Rahmens (3) und der beweglichen Elemente (2) bewirkt, deren Bewegung mittels mindestens einer seitlichen Führung (7) geführt wird.

5. System nach Anspruch 4, mit einem Antriebsmechanismus, der ein erstes konisches Zahnrad (8) umfasst, das mit einer Antriebswelle (9) verbunden ist, **dadurch gekennzeichnet, dass** das erste konische Zahnrad in das zweite konische Zahnrad (10) greift, das direkt mit der Welle (6) verbunden ist, deren Drehung die lineare Bewegung des Rahmens (3) bewirkt.

6. Verwendung eines Systems nach einem der Ansprüche 3 bis 5 als Drossel für Klimageräte.

**Revendications**

1. Buse réglable comprenant un corps fixe (1), dans laquelle un volume intérieur est défini entre une section d'entrée et une section de sortie, **caractérisée en ce qu'**elle comprend un élément mobile (2) qui à son tour comprend un corps d'obturation tridimensionnel (2') situé, avec possibilité de déplacement, de manière étanche à l'intérieur du volume intérieur du corps fixe (1), dans laquelle l'élément mobile (2) comprend également une surface d'obturation (2") située en correspondance avec la section d'entrée, dans laquelle ledit élément mobile (2) est mobile entre une position d'ouverture maximale de la buse, dans laquelle la surface d'obturation (2") maintient la section d'entrée complètement ouverte et le corps d'obturation (2') est situé dans le volume intérieur de sorte qu'il permet l'écoulement à travers la buse, et une position d'obturation, **caractérisée en ce que** dans la position d'obturation, la surface d'obturation (2") ferme complètement la section d'entrée et le corps d'obturation est situé dans le volume intérieur de sorte qu'il empêche l'écoulement à travers la buse.

2. Buse selon la revendication 1 qui est convergente, et le corps fixe (1) comporte quatre faces dont les opposées sont identiques deux à deux, dans laquelle le corps d'obturation (2') et les deux premières faces (1') du corps fixe (1) mutuellement opposées sont plates et présentent la même géométrie, tandis que les deux autres secondes faces (1") du corps fixe (1) présentent une configuration courbe de telle sorte que :

- le rapport de contraction (CR) entre l'entrée et la sortie de la buse est compris entre 5 et 25,
- le rapport entre la longueur de développement (L) de la buse et le diamètre intérieur de sortie ($D_o$) est $L/D_o > 2$,
- la courbure des secondes faces (1") comprend un profil de contraction avec une fonction lisse du 6ème degré présentant les caractéristiques suivantes :

- sans pente ni courbure à l'entrée et à la sortie dans la direction de l'axe central (x) de la buse,
- sans courbure au point d'inflexion ($x_{inf}$) de la courbe,

- dans lequel le rapport entre l'emplacement selon l'axe central (x) du point d'inflexion ($x_{inf}$) et la longueur de développement (L), $x_{inf}/L$ est compris entre 0,4 et 0,6.

3. Système comprenant une pluralité de buses réglables selon l'une quelconque des revendications précédentes, dans lequel les corps fixes (1) sont fixés les uns aux autres, et les éléments mobiles (2) sont également fixés les uns aux autres, dans lequel le système comprend au moins un cadre (3) auquel les éléments mobiles (2) sont fixés avec possibilité de coulissement à travers l'intérieur des corps fixes respectifs (1).

4. Système selon la revendication 3, dans lequel une extrémité d'au moins un cadre (3) comprend une patte (4) dans laquelle est logé un corps fileté (5), dans lequel un arbre (6) est vissé, dont la rotation produit le déplacement linéaire du cadre (3) et des éléments mobiles (2), dont le déplacement est guidé au moyen d'au moins un guide latéral (7).

5. Système selon la revendication 4, comprenant un mécanisme d'actionnement comprenant un premier engrenage conique (8) relié à un arbre d'actionnement (9), dans lequel ledit premier engrenage conique est en engrènement avec un second engrenage conique (10) qui est directement relié à l'arbre (6) dont la rotation produit le déplacement linéaire du cadre (3).

6. Utilisation d'un système selon l'une quelconque des revendications 3 à 5 en tant qu'inducteur pour dispositifs de climatisation.

FIG.1

FIG.2

FIG.3

FIG.4

**FIG.5**

**FIG.6**

**FIG.7**

FIG.8

FIG.9

FIG.10

FIG.11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1502932 A